**Europäisches Patentamt**

**European Patent Office**

**Office européen des brevets**

(19)

(11) **EP 1 569 394 A2**

(12) **EUROPEAN PATENT APPLICATION**

(43) Date of publication:
**31.08.2005 Bulletin 2005/35**

(51) Int Cl.⁷: **H04L 12/56**

(21) Application number: **05004135.9**

(22) Date of filing: **25.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **26.02.2004 EP 04004391**<br><br>(71) Applicant: **SES Astra S.A.**<br>**6815 Château de Betzdorf (LU)** | (72) Inventors:<br>• **Zanoth, Christian**<br>**54329 Konz (DE)**<br>• **Biewer, Patrick**<br>**6186 Gonderange (LU)**<br><br>(74) Representative: **Joppich, Martin**<br>**Intellectual Property Consultancy**<br>**Zeppelinstrasse 71-73**<br>**81669 München (DE)** |

(54) **Method and apparatus for allocating bandwidth to a plurality of user channels in a shared transmission channel**

(57) The present invention refers to a method and an apparatus for allocating bandwidth to a plurality of virtual channels within a shared transmission channel, each virtual channel has a virtual channel bandwidth and is connected to a corresponding user channel. It is an object of the invention to provide a method and an apparatus for allocating bandwidth to a plurality of virtual channels within a shared transmission channel which can be implemented on the basis of existing system components without the need to manipulate the underlying transmission protocols. A method for solving this object comprises the following steps:

a) receiving incoming user data of each connected user channel,

b) setting each virtual channel bandwidth in accordance with user configuration data,
c) transmitting outgoing user data corresponding to the incoming user data over the connected virtual channel and queuing the incoming user data if the virtual channel bandwidth is smaller than the data flow rate of the incoming user data,
d) measuring for all outgoing user data the data flow rate,
e) tuning each virtual channel bandwidth such that the sum of the data flow rates of the outgoing user data is changed towards the bandwidth of the shared transmission channel, and
f) repeating steps a) to f).

Fig. 1

**Description**

The present invention refers to a method and an apparatus for allocating bandwidth to a plurality of virtual channels within a shared transmission channel, each virtual channel has a virtual channel bandwidth and is connected to a corresponding user channel.

US 2003/0154272 A1 discloses a traffic shaping method of a satellite link. The traffic shaping method employs a leaky bucket approach according to US 6473793 B1 for each user which receives data via the satellite link. The throttling of the user data rate is achieved by controlling the TCP window sizes of the application server in accordance with a comparison of the leak rate of the bucket and various throttling thresholds which are set in accordance with a flow control meter tracking the load of the outroutes.

EP 1050117 A2 and WO 00/027044 A2 disclose a method for selectively allocating and enforcing bandwidth usage requirements on network users. A plurality of requesting terminals receive data from a source computer at variable rates controlled by a hybrid gateway. The hybrid gateway is adapted to determine account information for each requesting terminal such as the user's service plan or level of service and the user's current state, which in turn corresponds to the user's allowed peak and average data throughput rate. The user data rate is throttled in accordance with a comparison of the running average flow rate of each user and its account information. The throttling of the user data rate is achieved by controlling the TCP window sizes.

EP 0998093 B1, EP 1313289 A2, DE 19860756 C2 and DE 29924199 U1 disclose a method to transmit reverse channel data on a connection between a terminal and a server in a packet switched network over a terrestrial channel and over a shared satellite channel. The terrestrial channel is used as a primary channel. Upon a control signal the shared satellite channel is added to the terrestrial channel for increasing the bandwidth of the terrestrial channel. DE 10331111 A1 discloses a similar system in which the terrestrial channel and the shared satellite channel are always used simultaneously. WO 2004/100458 A1 discloses another similar system in which an administration unit administrates transmission parameters of the connection between the terminal and the server. The terminal can send a modification request message to the administration unit whereby for example the bandwidth of the connection can be altered. Furthermore, a management system is connected to the administration unit to have an optimum connection by means of a predefined target function.

A disadvantage of the systems according to EP 0998093 B1, EP 1313289 A2, DE 19860756 C2, DE 29924199 U1, DE 10331111 A1 and WO 2004/100458 A1 is the fact that there is no optimized bandwidth allocation within the shared satellite channel.

A disadvantage of the systems according to US 2003/0154272 A1, EP 1050117 A2 and WO 00/027044 A2 is the fact, that the controlling the TCP window sizes of the application server involves complicated controlling mechanisms and the administration of various throttling states.

Therefore, it is an object of the invention to provide a method and an apparatus for allocating bandwidth to a plurality of virtual channels within a shared transmission channel which can be implemented on the basis of existing system components without the need to manipulate the underlying transmission protocols.

This object is solved by a method according to claim 1 and an apparatus according to claim 13.

The method according to the invention for allocating bandwidth to a plurality of virtual channels within a shared transmission channel, each virtual channel having a virtual channel bandwidth and being connected to a corresponding user channel, comprises the following steps:

a) receiving incoming user data of each connected user channel,

b) setting each virtual channel bandwidth in accordance with user configuration data,

c) transmitting outgoing user data corresponding to the incoming user data over the connected virtual channel and queuing the incoming user data if the virtual channel bandwidth is smaller than the data flow rate of the incoming user data,

d) measuring for all outgoing user data the data flow rate,

e) tuning each virtual channel bandwidth such that the sum of the data flow rates of the outgoing user data is changed towards the bandwidth of the shared transmission channel, and

f) repeating steps a) to f).

The basic cognition of the invention is to apply a course adjustment and a fine tuning of each virtual channel bandwidth within a repeating iteration loop. The course adjustment is carried out in accordance with user configuration data whereas the fine tuning is carried out in accordance with the data flow rate of the sum of the outgoing user data.

The apparatus according to the invention for allocating bandwidth to a plurality of virtual channels within a shared transmission channel, each virtual channel has a virtual channel bandwidth and is connected to a corresponding user channel, comprises:

a first data queue provided for each user channel for receiving incoming user data of each connected user channel,

a throttle valve provided for each user channel behind the first data queue receiving the incoming user data and outputting the outgoing user data, wherein the setting of the throttle vale corresponds to the virtual channel bandwidth of the user channel,

a flow meter for measuring the data flow rate for all outgoing user data,

wherein the throttle valve of each user channel is set in accordance with user configuration data, wherein the outgoing user data corresponding to the incoming user data are transmitted over the connected virtual channel and wherein the incoming user data are queued if the virtual channel bandwidth is smaller than the data flow rate of the incoming user data, and

wherein each virtual channel bandwidth is tuned via the corresponding throttle valve such that the sum of the data flow rates of the outgoing user data is changed towards the bandwidth of the shared transmission channel.

According to one aspect of the invention the data flow rate of the incoming user data of each connected user channel is measured and the user configuration data are determined for each user channel on the basis of the measured data flow rate of the incoming user data of the corresponding user channel. This setting is advantageous if the shared transmission channel has enough or at least nearly enough capacity for assigning for each user channel the actually needed bandwidth. Preferably, the setting of each virtual channel bandwidth according to step b) is carried out stepwise depending on predetermined thresholds of the data flow rate of the incoming user data. Additionally, a hysteresis behaviour can be used in order to suppress switching oscillations around one switching point.

According to another aspect of the invention the user configuration data are determined for each user channel on the basis of predefined parameters. This setting is advantageous if the bandwidth of the shared transmission channel is usually smaller than the bandwidth demand of all user channels. By using predefined parameters the setting is not influenced directly by the bandwidth demand of each user channel but is carried out within the boundaries of the predefined parameters. It is possible that the predefined parameters depend on the static and/or dynamic behaviour of the corresponding user channel. The static behaviour means the actual parameters of the user channel like bandwidth demand or type of data, the dynamic behaviour means the change of the static behaviour over time (e.g. the slope of the actual bandwidth demand) and/or the integral of the static behaviour over time (e.g. the data volume).

The setting of each virtual channel bandwidth is implemented within an iteration loop. This means that the settings of each virtual channel bandwidth are checked with regard to system inconsistencies and are corrected accordingly, preferably each time the iteration loop is passed through. However, it is of course also possible to skip the setting step within one or more iteration loops if this is appropriate.

According to another aspect of the invention each virtual channel bandwidth is set and tuned via a throttling valve assigned for each user channel which receives the incoming user data and which outputs the outgoing user data. Preferably, a first data queue is provided before the corresponding throttling valve which queues the incoming user data if the virtual channel bandwidth set and tuned by the corresponding throttling valve is smaller than the data flow rate of the incoming user data. As to the behaviour of the first data queue two cases are to be distinguished: The virtual channel bandwidth given by the throttling valve might be smaller than the data flow rate of the incoming user data. In this case, the sum of the data flow rates of the outgoing user data will be equal to the sum of the virtual channel bandwidth settings of all throttle valves. On the other hand, the virtual channel bandwidth given by the throttling valve might be greater than the data flow rate of the incoming user data. In this case, the incoming user data pass directly the throttle valve. Now, the sum of the data flow rates of the outgoing user data will be smaller than the sum of the virtual channel bandwidth settings of all throttle valves.

According to another aspect of the invention a second data queue is provided for all outgoing user data which collects all outgoing user data and queues all outgoing user data if the bandwidth of the shared transmission channel is smaller than the sum of the data flow rates of the outgoing user data. In practice, the transmitting step comprises the features that the data packets are fetched from the output of each throttle valve and are passed on to the shared transmission channel. The amount of data packets which are fetched from the output of each throttle valve is given by the virtual channel bandwidth of each throttle valve.

Preferably, the second data queue can be used for measuring the data flow rate for all outgoing user data according to step d). A data queue behaves like a leaky bucket so that the change of the data level over a given time yields the average data flow rate related to that time. However, the second data queue cannot be used anymore for measuring the data flow rate for all outgoing user data if the sum of the data flow rates of all outgoing user data is smaller than the bandwidth of the shared transmission channel. In this case, each of the first data queues in connection with the setting of the corresponding throttling valve can be used for measuring the data flow rate for all outgoing user data according to step d). If the corresponding first data queue is filled, the virtual channel bandwidth corresponds to the virtual channel bandwidth set by the throttle valve. If the corresponding first data queue, however, is not filled, one has to use a direct measurement of the data flow rate of incoming user data which corresponds then to the data flow rate of the outgoing user data.

According to another aspect of the invention each virtual channel bandwidth is tuned according to step e) in proportion to a difference between the sum of the data flow rates of the outgoing user data and the bandwidth of the shared transmission channel. Preferably, the difference between the sum of the data flow rates of the outgoing user data and the bandwidth of the shared transmission channel is normalized by the absolute value of the bandwidth of the shared transmission channel and is weighted by a step size factor for yielding a small tuning increment. Alternatively, it is also possible to perform a one-step tuning, so that after performing step e) the sum of the data flow rates of the outgoing user data correspond to the bandwidth of the shared transmission channel. This is advantageous in combination with a course adjustment which is based on the actual flow rate of the incoming user data. As a result, the flow rates which are requested by the user channels are then mapped on the available bandwidth of the shared transmission channel wherein the proportion of the requested flow rates is maintained.

According to another aspect of the invention for each user channel an auxiliary channel is provided in addition to the virtual channel for decreasing the load on the virtual channel. If the first data queue of a virtual channel becomes full a switch can be used for switching the data by means of a load-balancing approach. This means that the switch switches the outgoing user data such that the delay of the outgoing user data on the auxiliary channel becomes approximately equal to the delay of the outgoing user data on the virtual channel within the shared satellite connection.

The invention will now be described by way of an example and with reference to the accompanying drawings in which

Fig. 1 shows a transmission system having a shared satellite transmission channel,

Fig. 2 shows a first embodiment of the transmission station according to Fig. 1,

Fig. 3 shows a second embodiment of the transmission station according to Fig. 1,

Fig. 4 shows a third embodiment of the transmission station according to Fig. 1, and

Fig. 5 shows a fourth embodiment of the transmission station according to Fig. 1.

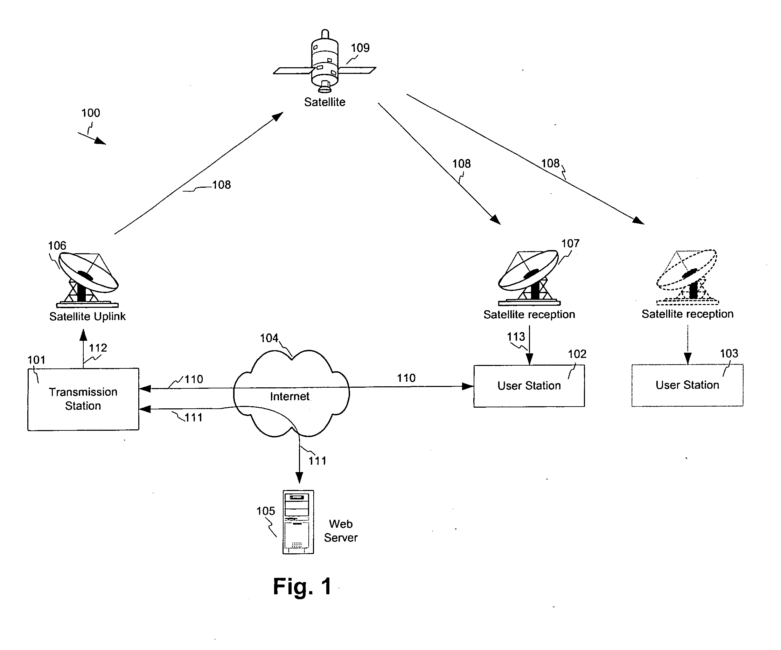

Fig. 1 shows a transmission system having a shared satellite transmission channel. The transmission system 100 comprises a transmission station 101 and a plurality of user stations 102, 103. To simplify matters, only the user station 102 is described in more detail wherein this description applies correspondingly to the other user stations 103.

The transmission system 100 provides to the user station 102 a high-speed access to the data stored in the web server 105 via the transmission station 101. The transmission station 101 is connected to the web server 105 via an Internet backbone connection 111. Furthermore, the transmission station 101 has two connections to the user station 102, namely the bi-directional Internet connection 110 via the Internet 104 and the uni-directional broadcast connection via the satellite link 112, 108, 113, wherein the satellite link comprises an earth station 106, a communication satellite 109 and a receiving station 107.

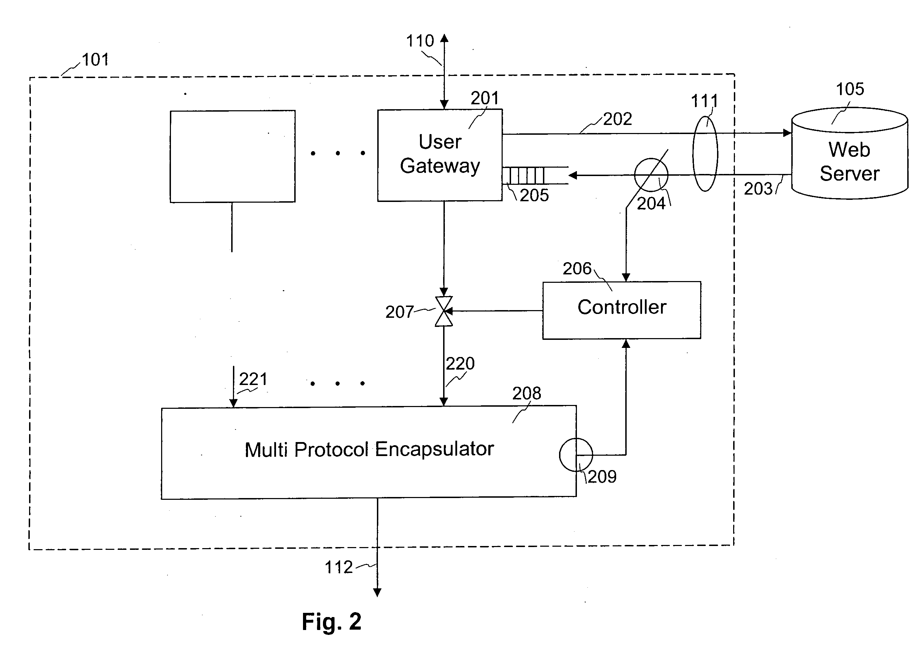

Fig. 2 shows a first embodiment of the transmission station 101 according to Fig. 1. The transmission station 101 is connected as shown in Fig. 1 via the Internet backbone connection 111 to the web server 105 and to the user station 102 both via the bi-directional Internet connection 110 and via the uni-directional satellite connection 112.

The transmission station 101 provides for each of the plurality of user stations 102, 103 a user gateway 201, a data flow meter 204, a data queue 205 and a throttle valve 207. To simplify matters, these components are shown only with regard to one user station, e.g. with regard to the user station 102.

Commonly used components of the transmission station 101 are a controller 206 for controlling all throttle valves of the transmission station 101, a multi protocol encapsulator 208 and a data flow meter 209 connected to the multi protocol encapsulator 208.

Upon a user request of the user station 102 via the bi-directional Internet connection 110, the user gateway 201 starts a data request 202 via the Internet backbone connection 111 to the web server 105. The web server 105 returns a reply 203 via the Internet backbone connection 111. The reply 203 is received as incoming user data in the data queue 205. The data flow rate of the incoming user data is measured in the data flow meter 204 and is input in the controller 206. The controller 206 adjusts the setting of the throttle valve 207 and thus also the virtual channel bandwidth of the corresponding user channel. During one transmission step the data packets are fetched from the output of each throttle valve and are passed on to the shared transmission channel. The amount of data packets which are fetched from the output of each throttle valve is given by the virtual channel bandwidth which is set and tuned by the corresponding throttle valve.

The data flow rate of all outgoing user data 220 and 221 is measured by the flow meter 209 and is also input in the controller 206. On the basis of the data flow rates measured by the flow meters 204 and 209 the controller 206 controls the throttle valve 207 by a course adjustment and a fine tuning.

A course adjustment of the throttle valve is carried out stepwise on the basis of the data flow rate of the incoming user data 203 using a look up table. A hysteresis behaviour is used in order to suppress switching oscillations around one switching point. A possible look up table is as follows, wherein R(t) is the data flow rate of the incoming user data 203 at the moment of time t and wherein R(t-1) is the corresponding data flow rate of the previous moment of time:

| data flow rate R(t) | R(t) <= 400kbit/s and R(t-1) > 400kbit/s | R(t) >= 600kbit/s and R(t-1) < 600kbit/s |
|---|---|---|
| setting of throttle valve data flow rate R(t) | 0 kbit/s R(t) <= 900kbit/s and R(t-1) > 900kbit/s | 500 kbit/s R(t) >= 1100kbit/s and R(t-1) < 1100kbit/s |
| setting of throttle valve data flow rate R(t) | 500 kbit/s R(t) <= 1400kbit/s and R(t-1) > 1400kbit/s | 1000 kbit/s R(t) >= 1600kbit/s and R(t-1) < 1600kbit/s |
| setting of throttle valve | 1000 kbit/s | 1500 kbit/s |

A fine tuning is carried out on the basis of the data flow rate of all outgoing user data 220, 221 measured by the flow meter 209 such that the sum of the data flow rates of the outgoing user data corresponds to the bandwidth of the shared transmission channel. Let the difference between the available bandwidth of the satellite channel $B_S$ and the measured bandwidth $B_D$ of all user data 220, 221 according to the flow meter 209 be:

$$\Delta B = B_S - B_D \qquad (1)$$

The correction value for the fine tuning of one throttle valve 207 is then:

$$\Delta b = \frac{b_{actual}}{B_D} \cdot \Delta B \qquad (2)$$

wherein $b_{actual}$ is the actual setting of the throttle valve 207.

This means that the setting of each throttle valve controlled by the controller 206 within the transmission station 101 is updated from the fine tuning step (n-1) to the fine tuning step (n) as follows:

$$b_{actual}(n) = b_{actual}(n-1) + \Delta b = b_{actual}(n-1) \cdot \frac{B_S}{B_D} \qquad (3)$$

$b_{actual}(n-1)$ results from the setting of the course adjustment, e.g. according to the look-up table as described above.

Due to the course adjustment of the throttle valve the data flow rate of the incoming user data 203 is mostly greater than the setting $b_i$ of the corresponding throttle valve (i.e. the corresponding data queue 205 is not empty). Furthermore, in most cases the setting of the throttle valve 207 equals the virtual channel bandwidth of the connected virtual channel. On these assumptions it can be shown that the following relations hold valid between all settings $b_i$ of

each of the throttle valves within the transmission station 101:

$$\sum_i b_{i,actual}(n) = B_S \qquad (4)$$

and

$$\sum_i b_{i,actual}(n-1) = B_D \qquad (5)$$

This means that the fine tuning step (n) according to formula (3) yields an immediate correction of the setting of each throttle valve such that the sum of the data flow rates of the outgoing user data correspond to the bandwidth of the shared transmission channel. On the basis of the new settings of the virtual channel bandwidths $b_{actual}(n)$ the transmission of the outgoing user data of each user channel can be continued as long as appropriate.

However, it is also possible to apply only small incremental corrections during one fine tuning step. For this purpose, the correction value for fine tuning $\Delta b$ according to formula (2) is weighted with a step size $\varepsilon$:

$$b_{actual}(n) = b_{actual}(n-1) + \varepsilon \cdot \Delta b \qquad (6)$$

wherein $0 < \varepsilon < 1$

and $\Delta b$ is the correction value for fine tuning according to formula (2)

$b_{actual}(n-1)$ results again from the setting of the course adjustment, e.g. according to the look-up table as described above. However, formula (6) yields now merely an incremental change of $b_{actual}(n-1)$ to $b_{actual}(n)$ but not anymore an immediate correction of the setting of each throttle valve such that the sum of the data flow rates of the outgoing user data correspond to the bandwidth of the shared transmission channel. Therefore, it is advantageous to skip the course adjustment within one or more iteration loops in order to give the small incremental corrections according to formula (6) more weight.

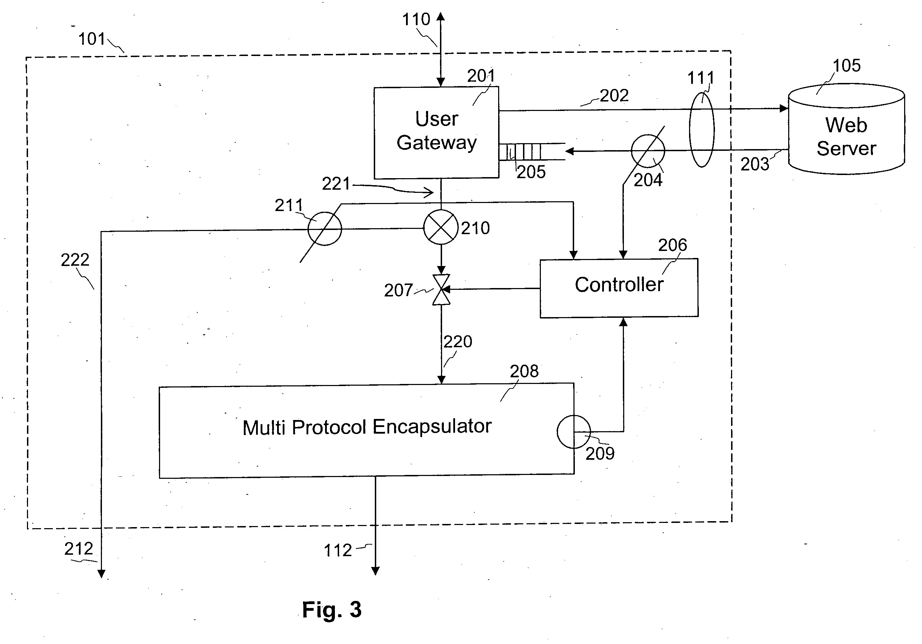

Fig. 3 shows a second embodiment of the transmission station 101 according to Fig. 1. The transmission station of the second embodiment corresponds to the transmission station of the first embodiment except that there is an additional auxiliary channel 212. For example, the Internet connection 110 according to Fig. 1 can be used as the auxiliary channel 212.

The setup of a new user channel is carried out as described in the first embodiment according to Fig. 2. This means that the first packets of each user channel are still transmitted via the shared transmission channel 112. If the data queue 205 becomes full a switch 210 switches the outgoing user data 221 such that the delay of the outgoing user data 222 on the auxiliary channel 212 is approximately equal to the delay of the outgoing user data 220 on the virtual channel within the shared satellite connection. A data flow meter 211 measures the data flow on the auxiliary channel 212 and inputs the measured data flow also in the controller 206. The controller 206 uses the measured data flow of the data flow meter 211 for correcting the value of the data flow meter 204 accordingly.

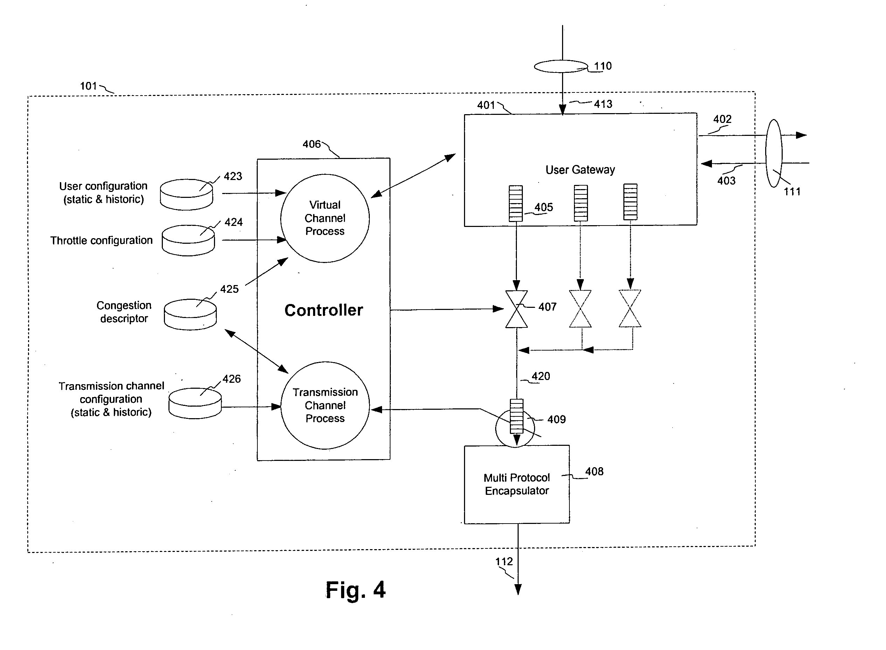

Fig. 4 shows a third embodiment of the transmission station 101 according to Fig. 1. The transmission station 101 is connected as shown in Fig. 1 via the Internet backbone connection 111 to the web server 105 and to the user station 102 both via the bi-directional Internet connection 110 and via the uni-directional satellite connection 112.

The transmission station 101 provides for each of the plurality of user stations 102, 103 a user gateway 401, a data queue 405 and a throttle valve 407. To simplify matters, these components are shown only with regard to one user station, e.g. with regard to the user station 102.

Commonly used components of the transmission station 101 are a controller 406 for controlling all throttle valves of the transmission station 101, a multi protocol encapsulator 408 and a data flow meter 409 connected to the multi protocol encapsulator 408.

Datalink 420 contains traffic of multiple virtual channels. The flow meter 409 on the multi protocol encapsulater has a queuing capacity for the case where the data rate on the link 420 is higher than the data rate on the shared

EP 1 569 394 A2

satellite transmission channel 112. If the queuing capacity is exceeded, packets can be dropped.

The main tasks of the transmission station 101 can be divided up in a user gateway process, a transmission channel process and a virtual channel process.

The user gateway process is responsible for receiving incoming user data of each connected user channel and for transmitting outgoing user data over the connected virtual channel.

The transmission channel process is responsible for measuring the actual demand of transmission channel bandwidth $B_D$, for determining the available channel bandwidth $B_S$ in accordance with the transmission channel attributes, for calculating the difference $\Delta B$ between the available bandwidth of the satellite channel $B_S$ and the measured bandwidth $B_D$ and for computing a congestion descriptor which is an iterative measure of $\Delta B$. The meaning of the congestion descriptor will be explained in more detail further below.

The virtual channel process is responsible for receiving virtual channel connection setup requests, creating a virtual channel for the user station according to the user configuration information and adjusting virtual channel bandwidth according to the dynamic user configuration and the congestion descriptor.

The processes of the transmission station 101 will now be described in more detail.

Upon a connection set-up request from of the user station 102 via the bi-directional Internet connection 110, the user gateway 401 requests the authorisation for establishing a virtual channel to the controller 406. The controller 406 retrieves the user configuration from the user configuration database 423. If the authorisation is granted, the controller initialises the throttling valve 407 for the virtual channel according to the throttling configuration of the throttle configuration database 424 and transmits the current user configuration to the user gateway 401 on that particular virtual channel.

The user station now starts a data request 413 via the Internet connection 110 to the user gateway 401. The user gateway 401 forwards this data request by data request 402 to the web server 105 via the Internet backbone connection 111. The web server 105 returns a reply 403 via the Internet backbone connection 111. The reply 403 is received as incoming user data in the data queue 405 and throttle valve 407 to the multi protocol encapsulator 408 via the data link 420.

On the basis of the flow meter 409 and the transmission channel configuration database 426 a congestion descriptor is computed and stored in the congestion descriptor database 425. As already mentioned above the congestion descriptor is an iterative measure of $\Delta B$ according to formula (1).

The congestion descriptor can be seen as a generalized level indicator of the data queue 409. Naturally, the data queue as such has only positive levels of the queued data. However, the congestion descriptor is able to describe also negative levels which occur if the demanded bandwidth $B_D$ is smaller than the available bandwidth $B_S$.

A general expression of the congestion descriptor is as follows:

$$c(n) = c(n-1) + f(\ c(n-1),\ B,\ tc\ ) \qquad (7)$$

c(n) is the congestion descriptor at the sample n c(n-1) is the congestion descriptor at the previous measurement sample
B is the actually measured bandwidth on the datalink 220
tc is the transmission channel configuration typically containing the available bandwidth $B_S$ of the shared satellite transmission channel 112

In the following, a specific congestion descriptor will be developed by taking a leaky bucket as an illustrative example. Let $B_D$ be the incoming data flow rate and $B_S$ the outgoing data flow rate of the leaky bucket. A decrease of the level of the leaky bucket in a given period of time is then proportional to $\Delta B = B_S - B_D$. The integral of $\Delta B$ over time is then proportional to the negative level itself. For building a relative measure, $\Delta B$ is related to $B_S$ and is weighted in each increment by a calibration function $\lambda$. The iterative expression of the congestion descriptor is then

$$c(n) = c(n-1) - \lambda \cdot \frac{\Delta B(n)}{B_S} \qquad (8)$$

with $\lambda > 0$ and $c(0) = 0$

Formula (8) represents an iterative integration, wherein the time of one increment step represents the integration period. Therefore, the congestion descriptor according to formula (8) is proportional to the level of the assumed leaky bucket and describes also negative levels. The calibration function $\lambda$ has to be chosen such that the congestion descriptor c(n) yields a stable correction of the actual virtual channel bandwidth in the consecutive fine tuning step. For this purpose, the calibration function $\lambda$ can also be a non-continuous function which bounds the congestion descriptor within admissible limits.

A general expression of the correction function in the fine tuning step is as follows:

$$b(n+1) = f ( b(n), c(t), tt, uc )\qquad(9)$$

Where:

b(n+1) is the corrected virtual channel bandwidth of the corresponding user channel at the sample n+1 resulting from a mathematical function using the previous virtual channel bandwidth b(n)

c(n) is the congestion descriptor, e.g. according to formula (8)

tt are data of the throttle configuration database 424 which contain information such as the minimum and maximum bandwidth for a given virtual channel

uc is the user configuration according to the user configuration database 423 which may contain bandwidth thresholds for a given dynamic user attributes, such as volume downloaded or time consumed

Using formulas (2), (3) and (8) yields the following fine tuning step as a sub-case of formula (9):

$$b(n+1)=b(n)-b(n){\cdot}c(n)=b(n)(1-c(n))\qquad(10)$$

b(n+1) is the corrected virtual channel bandwidth of the corresponding user channel at the sample n+1
c(n) is the congestion descriptor according to formula (8), wherein the calibration function $\lambda$ is chosen such that the module of c(n) is kept always smaller than 1, preferably smaller than 0,5, i.e.
-0,5 < c(n) < 0,5
b(n) results again from the setting of the course adjustment, which is carried out in the fourth embodiment according to the data of the user configuration database 423. The user configuration database provides initial values for b(0) and checks that the new corrected virtual channel bandwidth b(n+1) after each fine tuning step is still within the allowed limits given for the corresponding user channel. Like formula (6), formula (10) yields merely an incremental change of b(n) to b(n+1) but not an immediate correction of the setting of each throttle valve such that the sum of the data flow rates of the outgoing user data correspond to the bandwidth of the shared transmission channel. Therefore, it is also possible to skip the course adjustment within one or more iteration loops in order to give the small incremental corrections according to formula (10) more weight.
This closes the regulation loop, regulating the sum of the data rates of all outgoing user data $B_D$ towards the available bandwidth $B_S$ of the shared transmission channel.

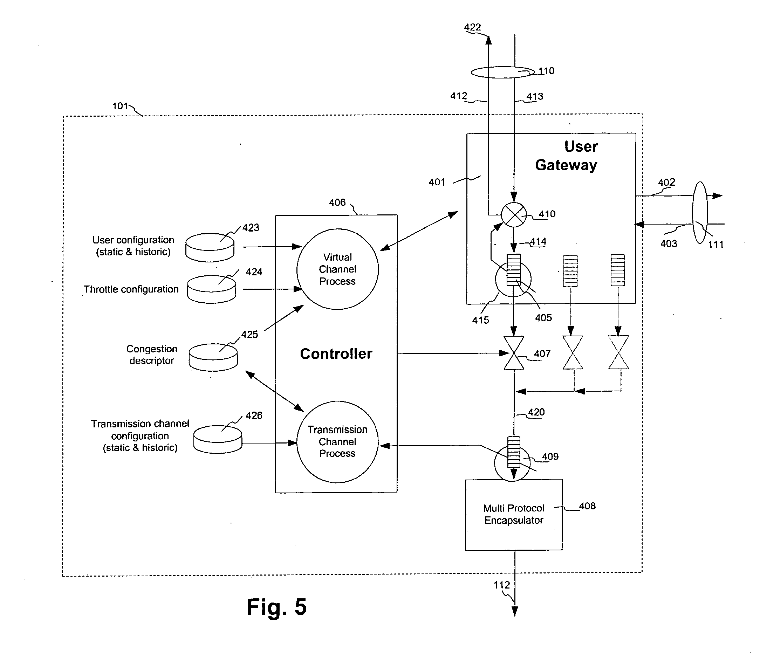

Fig. 5 shows a fourth embodiment of the transmission station where an overflow or auxiliary channel 412 is added to the virtual channel. The setup of a new user channel is carried out as described in the third embodiment according to Fig. 4. This means that the first packets of each user channel are still transmitted via the shared transmission channel 112. If the data queue 405 becomes full, packets are switched to the overflow channel 412 on a best effort basis until space becomes available on data queue 405. Hence, packets are then forwarded on this channel rather than forwarded via the throttle valve 407 by the means of a switch 410. The switch 410 is controlled according to the measurement results of the data flow meter 415. For example, the switch 410 switches the incoming user data 413 such that the delay of the outgoing user data 422 on the auxiliary channel 412 is approximately equal to the delay of the outgoing user data 420 on the virtual channel within the shared satellite connection.

**Claims**

1. Method for allocating bandwidth to a plurality of virtual channels within a shared transmission channel, each virtual channel has a virtual channel bandwidth and is connected to a corresponding user channel, comprising the steps of:

   a) receiving incoming user data of each connected user channel,

   b) setting each virtual channel bandwidth in accordance with user configuration data,

   c) transmitting outgoing user data corresponding to the incoming user data over the connected virtual channel and queuing the incoming user data if the virtual channel bandwidth is smaller than the data flow rate of the incoming user data,

d) measuring for all outgoing user data the data flow rate,

e) tuning each virtual channel bandwidth such that the sum of the data flow rates of the outgoing user data is changed towards the bandwidth of the shared transmission channel, and

f) repeating steps a) to f).

2. Method according to claim 1, wherein the data flow rate of the incoming user data of each connected user channel is measured and wherein the user configuration data are determined for each user channel on the basis of the measured data flow rate of the incoming user data of the corresponding user channel.

3. Method according to claim 2, wherein the setting of each virtual channel bandwidth according to step b) is carried out stepwise depending on predetermined thresholds of the data flow rate of the incoming user data.

4. Method according to claim 1, wherein the user configuration data are determined for each user channel on the basis of predefined parameters.

5. Method according to claim 4, wherein the predefined parameters depend on the static and/or dynamic behaviour of the corresponding user channel.

6. Method according to one of the claims 1 - 5, wherein each virtual channel bandwidth is set and tuned via a throttling valve assigned for each user channel which receives the incoming user data and which outputs the outgoing user data.

7. Method according to claim 6, wherein for each user channel a first data queue is provided before the corresponding throttling valve which queues the incoming user data if the virtual channel bandwidth given by the throttling valve is smaller than the data flow rate of the incoming user data.

8. Method according to one of the claims 1 - 7, wherein for all outgoing user data a second data queue is provided which collects all outgoing user data and queues all outgoing user data if the bandwidth of the shared transmission channel is smaller than the sum of the data flow rates of the outgoing user data.

9. Method according to claim 8, wherein the second data queue is used for measuring the data flow rate for all outgoing user data according to step d).

10. Method according to one of the claims 7 - 9, wherein each of the first data queues in connection with the setting of the corresponding throttling valve are used for measuring the data flow rate for all outgoing user data according to step d).

11. Method according to one of the claims 1 - 10, wherein each virtual channel bandwidth is tuned according to step e) in proportion to a difference between the sum of the data flow rates of the outgoing user data and the bandwidth of the shared transmission channel.

12. Method according to one of the claims 1 - 10, wherein each virtual channel bandwidth is tuned in one step such that the sum of the data flow rates of the outgoing user data correspond to the bandwidth of the shared transmission channel.

13. Method according to one of the claims 1 - 12, wherein for each user channel an auxiliary channel is provided in addition to the virtual channel for decreasing the load on the virtual channel.

14. Apparatus for allocating bandwidth to a plurality of virtual channels within a shared transmission channel, each virtual channel has a virtual channel bandwidth and is connected to a corresponding user channel, comprising:

a first data queue provided for each user channel for receiving incoming user data of each connected user channel,

a throttle valve provided for each user channel behind the first data queue receiving the incoming user data and outputting the outgoing user data, wherein the setting of the throttle vale corresponds to the virtual channel bandwidth of the user channel,

a flow meter for measuring the data flow rate for all outgoing user data,

wherein the throttle valve of each user channel is set in accordance with user configuration data,
wherein the outgoing user data corresponding to the incoming user data are transmitted over the connected virtual channel and wherein the incoming user data are queued if the virtual channel bandwidth is smaller than the data flow rate of the incoming user data, and
wherein each virtual channel bandwidth is tuned via the corresponding throttle valve such that the sum of the data flow rates of the outgoing user data is changed towards the bandwidth of the shared transmission channel.

15. Apparatus according to claim 14, wherein the data flow rate of the incoming user data of each connected user channel is measured and wherein the user configuration data are determined for each user channel on the basis of the measured data flow rate of the incoming user data of the corresponding user channel.

16. Apparatus according to claim 15, wherein the setting of each virtual channel bandwidth is carried out stepwise depending on predetermined thresholds of the data flow rate of the incoming user data.

17. Apparatus according to claim 14, wherein the user configuration data are determined for each user channel on the basis of predefined parameters.

18. Apparatus according to claim 17, wherein the predefined parameters depend on the static and/or dynamic behaviour of the corresponding user channel.

19. Apparatus according to one of the claims 14 - 18, wherein for all outgoing user data a second data queue is provided which collects all outgoing user data and queues all outgoing user data if the bandwidth of the shared transmission channel is smaller than the sum of the data flow rates of the outgoing user data.

20. Apparatus according to claim 19, wherein the second data queue is used for measuring the data flow rate for all outgoing user data.

21. Apparatus according to one of the claims 19 - 20, wherein each of the first data queues in connection with the setting of the corresponding throttling valve are used as a flow meter for measuring the data flow rate for all outgoing user data.

22. Apparatus according to one of the claims 14 - 21, wherein each virtual channel bandwidth is tuned in proportion to a difference between the sum of the data flow rates of the outgoing user data and the bandwidth of the shared transmission channel.

23. Apparatus according to one of the claims 14 - 21, wherein each virtual channel bandwidth is tuned in one step such that the sum of the data flow rates of the outgoing user data correspond to the bandwidth of the shared transmission channel.

24. Apparatus according to one of the claims 14 - 22, wherein for each user channel an auxiliary channel is provided in addition to the virtual channel for decreasing the load on the virtual channel.

**Fig. 1**

109 Satellite

100

108

108 108

106 Satellite Uplink

107 Satellite reception

Satellite reception

112

113

101 Transmission Station

102 User Station

103 User Station

104 Internet

110 110

111

111

105 Web Server

EP 1 569 394 A2

**Fig. 2**

EP 1 569 394 A2

**Fig. 3**

EP 1 569 394 A2

**Fig. 4**

Fig. 5